# EUROPÄISCHE PATENTSCHRIFT

(11) **EP 0 675 021 B1**
(45) Veröffentlichungstag und Bekanntmachung des Hinweises auf die Patenterteilung: **16.06.1999**
(21) Anmeldenummer: 95104276.1
(22) Anmeldetag: 23.03.1995
(51) Int. Cl.: B60Q 1/04

(54) **Halteeinrichtung für einen verstellbaren Reflektor eines Fahrzeug-Scheinwerfers**
Adjustable reflector fination device for a vehicle headlamp
Dispositif de fixation d'un réflecteur ajustable pour phare de véhicule

(30) Priorität: 30.03.1994 DE 4411014
(43) Veröffentlichungstag der Anmeldung: 04.10.1995
(73) Patentinhaber: Hella KG Hueck & Co., 59552 Lippstadt (DE)
(72) Erfinder: Heitjohann, Peter, D-33378 Rheda-Wiedenbrück (DE)

(56) Entgegenhaltungen:
- DE-A- 4 040 682
- FR-A- 2 244 345
- US-A- 4 660 128

## Beschreibung

Die Erfindung betrifft eine Halteeinrichtung für einen verstellbaren Reflektor eines Fahrzeug-Scheinwerfers, mit einem federnden Halteelement, durch welches der Reflektor mit einer Anlagefläche an ein Verstellelement unter Vorspannung anlegbar ist, wobei der Reflektor in ein topfförmiges Gehäuse eingesetzt ist, mit welchem das federnde Halteelement verbunden ist und welches eine Öffnung zur Aufnahme des Verstellelementes aufweist.

Eine solche Halteeinrichtung für einen verstellbaren Reflektor eines Fahrzeug-Scheinwerfers ist aus der DE 23 24 340 bekannt. Der Scheinwerfer weist ein topfförmiges Gehäuse und eine das Gehäuse abschließende lichtdurchlässige Abschlußscheibe auf. In den von dem topfförmigen Gehäuse und der Abschlußscheibe gebildeten Innenraum ist ein schalenförmiger Reflektor eingesetzt, welcher um eine horizontale und eine vertikale Achse verschwenkbar ist. In einem Abstand zur horizontalen Achse ist die Rückseite des Reflektors mit dem Boden des Gehäuses durch ein federndes Halteelement verbunden. Das federnde Halteelement ist eine Schraubenfeder, deren Mittelachse in Einsetzrichtung des Reflektors verläuft und in eine in die Rückseite des Reflektors eingebrachte Öffnung eingehakt ist. Die Schraubenfeder ist eine Zugfeder und zieht den Reflektor zur Rückseite des Gehäuses hin. Nahe der Schraubenfeder ist in den Boden des topfförmigen Gehäuses eine Öffnung eingebracht, welche zur Aufnahme eines fernverstellbaren Verstellelementes dient, durch welche der Reflektor um die horizontale Achse schwenkbar ist. Das Verstellelement ist zylinderförmig gestaltet und steht von der Rückseite des Gehäuses ab. Ein Verstellbolzen des Verstellelementes führt durch die Öffnung des Gehäuses hindurch und weist mit seinem freien Ende in Lichtaustrittsrichtung. An dem freien Ende des Verstellbolzens liegt der Reflektor mit einer in Einsetzrichtung des Reflektors gerichteten Anlagefläche an. Die Anlagefläche ist von einem Verbindungsteil gebildet, welches an dem äußeren Rand des Reflektors befestigt ist. In dem Verbindungsteil ist die Öffnung eingebracht, in welche die Schraubenfeder eingehakt ist. Die als Zugfeder dienende Schraubenfeder drückt den Reflektor so fest gegen den Verstellbolzen des Verstellelementes, daß der Reflektor in jeder Schwenkstellung klapperfrei gehalten ist. Eine Montage und Demontage des Verstellelementes ist einfach und schnell durchführbar, da zwischen dem Verstellbolzen und dem Verbindungselement keine selbstrastende Verbindung, welche oftmals üblich ist, besteht. Jedoch ist die Montage der Schraubenfeder sehr umständlich und zeitaufwendig, da die Schraubenfeder erst dann in die Öffnung des Verbindungsteils des Reflektors eingehakt werden kann, wenn der Reflektor in das topfförmige Gehäuse eingesetzt ist. Das Einhaken der Schraubenfeder ist von der Vorderseite des Scheinwerfers her nicht möglich wenn zwischen dem Reflektor und den Seitenwänden des topfförmigen Gehäuses ein kleiner Spalt besteht. Das Einhaken der Schraubenfeder ist dann nur durch die Öffnung im Boden des Gehäuses hindurch möglich. Die Öffnung für das Verstellelement ist oftmals so klein, daß ein Einhaken der Schraubenfeder von Hand nicht möglich ist, sondern dafür eine spezielle Montagevorrichtung notwendig ist.

Aufgabe der Erfindung ist es, die im Oberbegriff des Anspruchs 1 beschriebene Halteeinrichtung für einen verstellbaren Reflektor eines Fahrzeug-Scheinwerfers derart zu gestalten, daß das federnde Halteelement vor dem Einsetzen des Reflektors an der Innenseite des topfförmigen Gehäuses befestigbar ist und beim Einsetzen des Reflektors in das topfförmige Gehäuse sich selbsttätig mit dem Reflektor verbindet. Diese Aufgabe wird nach der Erfindung dadurch gelöst, daß das federnde Halteelement stabförmig ausgeführt ist, in seiner Längsausdehnung quer zur Einsetzrichtung des Reflektors verläuft, an dem Gehäuse fest eingespannt ist und einen freistehenden Endabschnitt aufweist, welcher in eine Hinterschneidung des Reflektors selbstrastend eingreift.

Weiterhin ist es vorteilhaft, wenn das Gehäuse mit einer entgegen der Einsetzrichtung des Reflektors gerichteten und als Anschlag für den federnden Endabschnitt des Halteelements dienenden Fläche versehen ist, von welcher der federnde Endabschnitt bei eingesetztem Verstellelement abgehoben ist. Dadurch stützt sich der freie Endabschnitt des Halteelementes beim Einsetzen des Reflektors in das topfartige Gehäuse an dem Anschlag ab bis der freie Endabschnitt in die Hinterschneidung des Reflektors selbstrastend eingreift. Hierbei ist es zweckmäßig, wenn bei demontiertem Verstellelement das Halteelement federnd an dem Anschlag anliegt. Bei einer solchen Ausgestaltung ist der Reflektor bis zur Montage des Verstellelementes klapperfrei in dem topfförmigen Gehäuse gehalten. Dies ist besonders dann wichtig, wenn das Verstellelement erst in der Endmontage des Fahrzeuges montiert wird. In diesem Zusammenhang ist es weiterhin vorteilhaft, wenn die Anlagefläche des Reflektors eine Kugelschale ohne Hinterschneidung ist, in welche ein Kugelkopf des Verstellelementes eingreift. Hierbei ist der Reflektor, obwohl das Verstellelement weiterhin einfach und leicht montierbar und demontierbar ist, an dem Verstellelement quer zu seiner Einsetzrichtung arretiert.

Vorteilhaft ist es weiterhin, wenn die Rückseite des Reflektors mit einer schräg zur Einsetzrichtung des Reflektors verlaufenden Auflauffläche für den federnden Arm des Halteelement versehen ist. Beim Einsetzen des Reflektors gleitet das Halteelement mit seinem federnden freien Endabschnitt an der Auflauffläche des Reflektors entlang bis der Endabschnitt selbstrastend in die Hinterschneidung des Reflektors eingreift.

Ein weiterer Vorteil ist es, wenn an der Rückseite des Reflektors ein Verbindungselement befestigt ist, welches die für das Verstellelement dienende Anlagefläche und die für das Halteelement dienende Auflagefläche und Hinterschneidung aufweist. Ein solches separates Verbindungselement kann aus Kunststoff bestehen und zu seiner Herstellung müssen keine zusätzlichen verstellbaren Werkzeuge notwendig sein.

Zudem ist es vorteilhaft, wenn das Halteelement in einem Abschnitt zwischen seiner einspannenden Stelle und seinem federnden freien Endabschnitt um eine quer zu seiner Längsausdehnung verlaufende Achse zu einer Schraubenfeder gewickelt ist. Dadurch kann das stabförmige Halteelement bis auf den als Schraubenfeder ausgeführten Abschnitt biegesteif sein. Trotzdem ist bei einer kleinen Verstellkraft des Verstellelementes ein großer Verstellweg des federnden Endabschnittes möglich. Außerdem kann der freie Endabschnitt des Halteelementes wegen seiner hohen Biegesteifigkeit sehr lang ausgeführt sein und somit kann die Einspannstelle des federnden Halteelements in Einsetzrichtung des Reflektors gesehen in einem größeren Abstand zu der Hinterschneidung des Reflektors angeordnet sein.

Außerdem ist es vorteilhaft, wenn das Halteelement durch ein bolzenartiges Befestigungselement an dem Gehäuse fest eingespannt ist, wobei das bolzenartige Befestigungselement mit einem Kopf das Halteelement übergreift und gegen das Gehäuse drückt. Durch das bolzenartige Befestigungselement ist eine einfache und schnelle Befestigung des Halteelementes an der Innenseite des Gehäuses möglich.

Bei einer besonders vorteilhaften Weiterbildung der Erfindung besteht das federnde Halteelement aus einer U-förmig gebogenen Drahtfeder, deren Schenkel jeweils ein stabförmiges Teil sind, das Verbindungselement zwischen sich aufnehmen und in jeweils eine Hinterschneidung des Verbindungselements eingreifen. Bei einer solchen Ausgestaltung ist die zwischen dem Halteelement und dem Reflektor bestehende selbstrastende Verbindung sehr sicher gegenüber einem ungewollten Lösen. Hierbei ist es weiterhin zweckmäßig, wenn bei demontiertem Verstellelement ein Abstandselement des Gehäuses zwischen die beiden Schenkel des Halteelementes eingreift. Dadurch ist es nicht erforderlich, daß die Schenkel beim Einsetzen des Reflektors in das topfförmige Gehäuse soweit auseinander federn müssen und trotzdem kann das Verbindungselement zwischen den beiden Schenkeln sehr fest eingespannt sein.

Weiterhin ist es vorteilhaft, wenn die beiden Schenkel des U-förmigen Halteelements auf sich gegenüberliegenden Seiten jeweils in einem Abschnitt zu einer Schraubenfeder gewickelt sind, welche zu den freien Endabschnitten der Schenkel nach außen hin verlaufen und die als Schraubenfedern ausgeführten Abschnitte der Schenkel außen an einem Abstützelement des Gehäuses angrenzen. Wegen den beiden Abstützelementen, welche die beiden als Schraubenfedern ausgeführten Abschnitte zwischen sich aufnehmen, vergrößert sich die Kraft, welche zum Auseinanderbiegen der freien Endabschnitte notwendig ist. Hierbei ist es weiterhin zweckmäßig, wenn das Halteelement mit den an seinen Steg angrenzenden Abschnitt der Schenkel zum Boden des topfförmigen Gehäuses hin abgewinkelt ist und mit dem abgewinkelten Abschnitt in eine Ausnehmung des Bodens des Gehäuses eingeschoben ist und in der Ausnehmung in Längsausdehnung des Halteelementes gehalten ist. Dadurch muß das bolzenartige Befestigungselement das Halteelemente lediglich in Einsetzrichtung des Reflektors halten. Die außen an die Ausnehmung angrenzenden Abschnitte der Schenkel sollten einen so kleinen Abstand zueinander aufweisen, daß das bolzenartige Befestigungselement zwischen ihnen noch hindurchführbar ist und mit einem Kopf die Schenkel übergreift und die Schenkel gegen den Boden des topfförmigen Gehäuses drückt.

Darüber hinaus ist es weiterhin vorteilhaft, wenn vom Boden des topfförmigen Gehäuses zum Inneren des Scheinwerfers hin Ansätze hervorstreben, welche als Distanzstücke für das Halteelement dienen. Hierbei ist es vorteilhaft, wenn ein erster Ansatz hülsenförmig ausgeführt und die Befestigungsstelle für das bolzenartige Befestigungselement ist, zwei zweite Ansätze die Ausnehmung bilden, in welche das Halteelement mit dem den Steg aufweisenden Abschnitt angeschoben ist, ein dritter Ansatz mit seiner Stirnfläche der Anschlag für die freien Endabschnitte des Halteelementes ist und zwei vierte Ansätze das Abstützteil für die als Schraubenfeder ausgeführten Abschnitte sind.

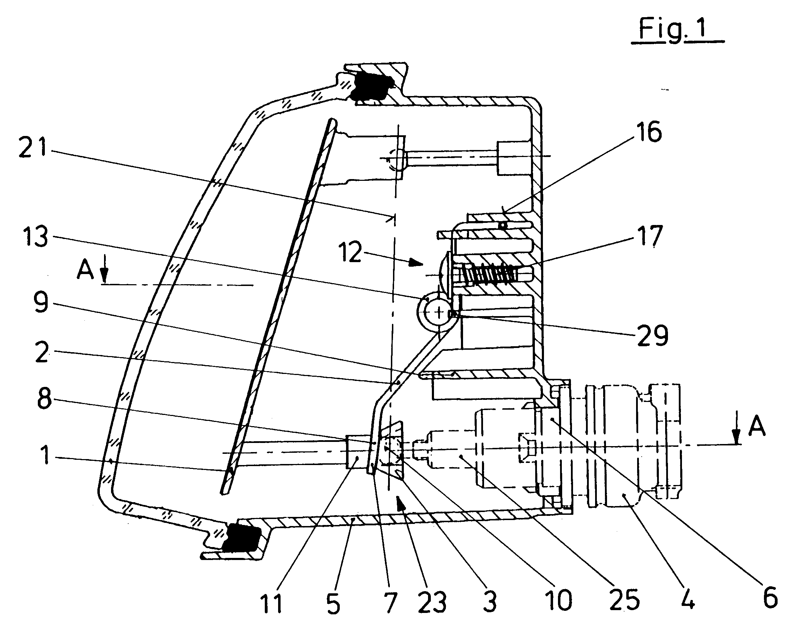

Ein Ausführungsbeispiel der Erfindung ist in den Zeichnungen dargestellt, und zwar zeigen
- Figur 1: einen vertikalen Längsschnitt durch einen Scheinwerfer für Fahrzeuge mit einer Halteeinrichtung für einen verstellbaren Reflektor, welcher durch die Halteeinrichtung mit einem Verstellelement zusammenwirkt;

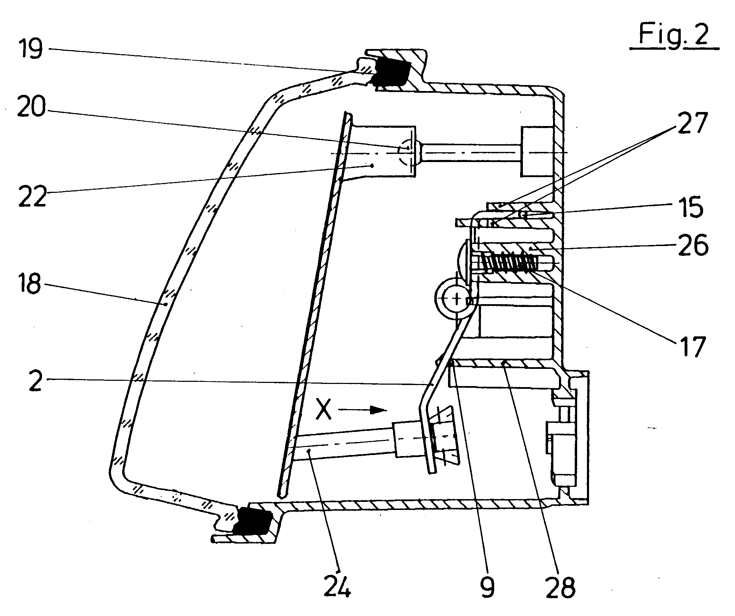

- Figur 2: den vertikalen Längsschnitt der Figur 1 ohne das Verstellelement;

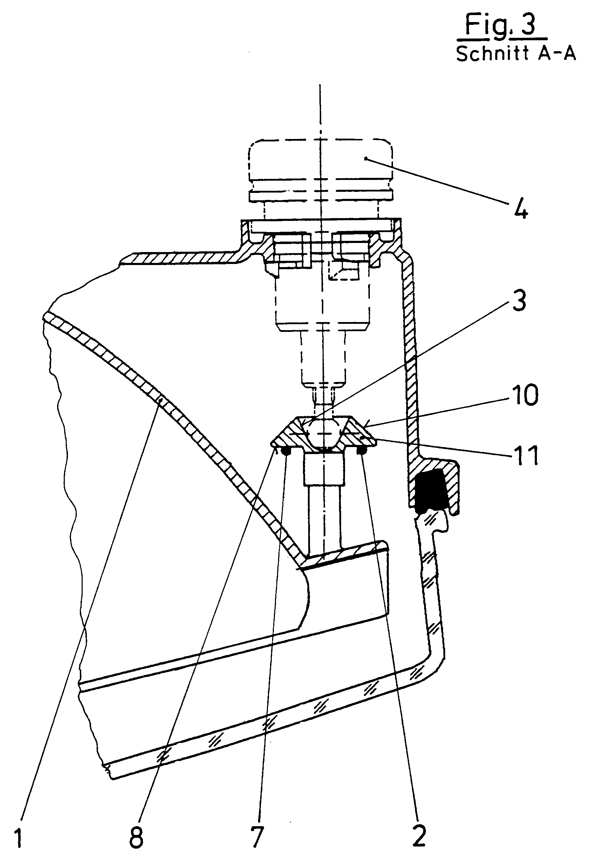

- Figur 3: einen Schnitt nach der Linie A-A in Figur 1;

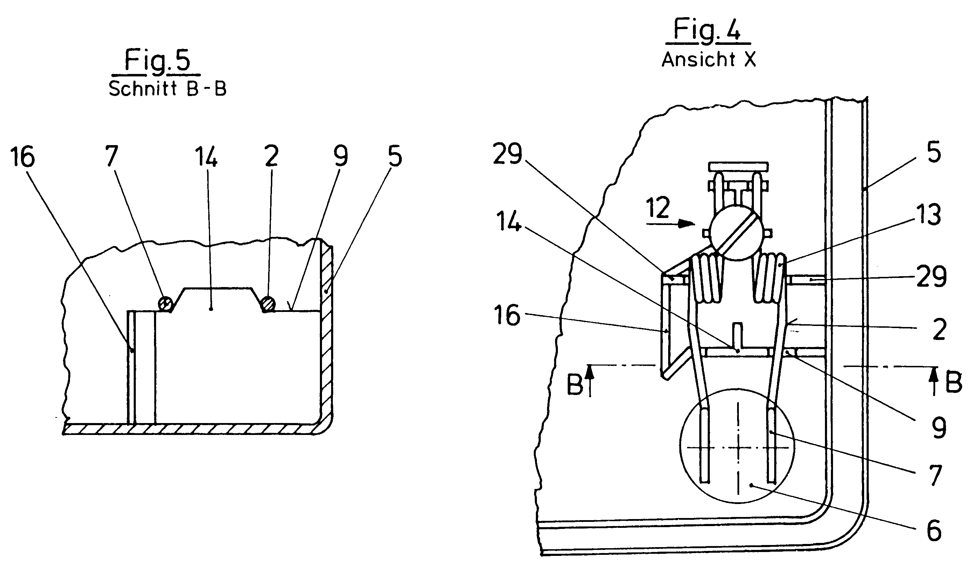

- Figur 4: eine Ansicht aus Richtung x in Figur 2 und
- Figur 5: einen Schnitt nach der Linie B-B in Figur 4.

Ein Scheinwerfer für Fahrzeuge weist ein aus Kunststoff bestehendes topfförmiges Gehäuse (5) auf, welches durch eine schalenförmige lichtdurchlässige Abschlußscheibe (18) abgeschlossen ist. In einer Rinne des äußeren umlaufenden Randes des Gehäuses (5) ist eine Dichtung (19) eingesetzt, an welcher die Abschlußscheibe (18) mit ihrem äußeren umlaufenden Rand dicht anliegt. In den von dem topfförmigen Gehäuse (5) und der Abschlußscheibe (18) gebildeten Innenraum des Scheinwerfers ist ein aus Kunststoff hergestellter schalenförmigen Reflektor (1) eingesetzt, welcher um eine horizontale Achse (20) und eine vertikale Achse (21) schwenkbar ist. Die horizontale Achse (20) wird von einem ortsfesten Gelenk (22) und einem nicht dargestellten Gelenk gebildet, welches zwischen einem von Hand verstellbaren Verstellelement und der Rückseite des Reflektors (1) angeordnet ist. Die vertikale Achse (21) wird gebildet von dem ortsfesten Gelenk (22) und einem Gelenk (23), welches in einem Abstand unterhalb des Gelenkes (22) und zwischen der Rückseite des Reflektors (1) und einem fernverstellbaren Verstellelement (4) angeordnet ist. Bei einem Verstellen des Verstellelementes (4) schwenkt der Reflektor (1) um die horizontale Achse (20).

Das Gelenk (23) ist von einer Kugelschale eines an der Rückseite des Reflektors (1) befestigten Verbindungselementes (11) und einem Kugelkopf des Verstellelementes (4) gebildet. Das Verbindungselement (11) ist aus Kunststoff hergestellt und selbstrastend mit einem an die Rückseite des Reflektors (1) angeformten Vorsprung (24) verbunden. Das Verbindungselement (11) weist in Einsetzrichtung des Reflektors (1) gesehen, direkt hinter dem Vorsprung (24) die Kugelschale auf, dessen Innenseite die Anlagefläche (3) für den Kugelkopf des Verstellelementes (4) ist. Die Kugelschale weist den Vorsprung (24) seitlich überragende Abschnitte auf, während die in Lichtaustrittsrichtung gerichtete Seite die Hinterschneidung (8) ist. Zwischen der Anlagefläche (3) der Kugelschale und der Hinterschneidung (8) weist das Verbindungselement (11) schräg zur Einsetzrichtung verlaufende und zum Boden des topfartigen Gehäuses (5) hin gerichtete Auflaufflächen (10) auf. Die Anlagefläche (3) der Kugelschale des Verbindungselementes (11) weist zum Boden des Gehäuses (5) hin keine Hinterschneidung auf, so daß das Verstellelement (4) mit seinem Kugelkopf leicht und einfach in die Kugelschale einsetzbar und aus dieser herausnehmbar ist. Das fernverstellbare Verstellelement (4) weist ein zylindrisches Gehäuse auf, welches von der Rückseite des Gehäuses (5) her in eine Öffnung (6) des Bodens des Gehäuses (5) bajonettartig eingesetzt ist. Das fernverstellbare Verstellelement (4) weist einen Verstellbolzen (25) auf, welcher mit seinem freien Ende in Lichtaustrittsrichtung gerichtet ist und an seinem freien Ende den Kugelkopf des Gelenkes (23) trägt. Der Verstellbolzen (25) ist in Richtung seiner Längsachse axial verstellbar. Ein federndes Halteelement (2), welches an dem Boden des Gehäuses (5) fest eingespannt ist, greift in die Hinterschneidung (8) des Verbindungselementes (11) selbstrastend ein und drückt die zum Verstellelement (4) hin offene Anlagefläche (3) der Kugelschale an den Kugelkopf des Verstellelementes (4).

Das federnde Halteelement (2) besteht aus Federdraht und ist in Einsetzrichtung des Reflektors (1) gesehen U-förmig gebogen und spannt zwischen den freien Endabschnitten seiner Schenkel das Verbindungselement (11) fest zwischen sich ein. An der Innenseite des Bodens des topfförmigen Gehäuses (5) sind Ansätze (16) angeformt, welche Distanzstücke und Befestigungsmittel für das Halteelement (2) sind. Ein erster Ansatz (26) ist hülsenförmig ausgeführt und dient als Befestigungsmittel für ein bolzenartiges Befestigungselement (17), welches mit einem Kopf die Schenkel des U-förmigen Halteelementes (2) nahe neben dem die Schenkel verbindenden Steg (15) übergreift und die Schenkel gegen die Stirnfläche des ersten Ansatzes (26) andrückt. Zwischen dem bolzenartigen Befestigungselement (17) und dem Steg (15) ist das Halteelement (2) mit einem Abschnitt um eine quer zu den Schenkeln verlaufende Biegeachse zur Rückseite des Scheinwerfers hin gebogen und in eine zwischen zwei zweiten Ansätzen (27) des Bodens des Gehäuses (5) bestehende Ausnehmung klemmend eingeschoben. Einer der beiden zweiten Ansätze (27) ragt zwischen beiden Schenkel des Haltelementes (2) hindurch. Somit ist das Halteelement (2) im Bereich seines Steges (15) durch die beiden Ansätze (27) quer zur Einsetzrichtung des Reflektors (1) arretiert. Durch das bolzenartige Befestigungselement (17), welches eine Schraube ist, ist das Halteelement (2) lediglich in Einsetzrichtung des Reflektors (1) an dem Boden des Gehäuses (5) arretiert. Angrenzend an das bolzenartige Befestigungselement (17) weist das Halteelement (2) an beiden Schenkeln einen Abschnitt auf, welcher um eine quer zu den Schenkeln verlaufende Achse zu einer Schraubenfeder (13) gebogen ist, wobei die beiden Schraubenfedern (13) zum freien Endabschnitt (7) ihres Schenkels hin nach außen hin verläuft, so daß der Abstand der freien Endabschnitte (7) des Halteelementes (2) zueinander größer ist als die Länge des Stegs (15). Die beiden Schraubenfedern (13) grenzen außen jeweils an einen vierten Ansatz (29) des Gehäuses (5) an. Dadurch sind beide Schraubenfedern (13) zwischen den beiden vierten Ansätzen (29) gehalten. Zwischen den beiden Schraubenfedern (13) des Halteelementes (2) und dem Gelenk (23) ist an den Boden des Gehäuses (5) ein dritter Ansatz (28 angeformt, dessen Stirnfläche als Anschlag (9) für die freien Endabschnitte (7) des Halteelementes (2) dient. Das Halteelement (2) liegt nur an den Anschlägen an, wenn das Verstellelement (4) demontiert ist.

Der dritte Ansatz (28) weist einen als Abstandselement (14) dienenden Abschnitt auf, welcher sich zwischen die Endabschnitte (7) des Halteelementes (2) erstreckt.

### Bezugszeichenliste

### Halteeinrichtung für einen verstellbaren Reflektor eines Fahrzeug-Scheinwerfers

- 1: Reflektor
- 2: Halteelement
- 3: Anlagefläche
- 4: Verstellelement
- 5: Gehäuse
- 6: Öffnung
- 7: Endabschnitt
- 8: Hinterschneidung
- 9: Anschlag
- 10: Auflauffläche
- 11: Verbindungselement
- 12: Einspannstelle
- 13: Schraubenfeder
- 14: Abstandselement
- 15: Steg
- 16: Ansätze
- 17: Befestigungselement
- 18: Abschlußscheibe
- 19: Dichtung
- 20: horizontale Achse
- 21: vertikale Achse
- 22: Gelenk
- 23: Gelenk
- 24: Vorsprung
- 25: Verstellbolzen
- 26: erster Ansatz
- 27: zweiter Ansatz
- 28: dritter Ansatz
- 29: vierter Ansatz

## Patentansprüche

1. Halteeinrichtung für einen verstellbaren Reflektor (1) eines Fahrzeug-Scheinwerfers, mit einem federnden Halteelement (2), durch welches der Reflektor (1) mit einer Anlagefläche (3) an ein Verstellelement (4) unter Vorspannung anlegbar ist, wobei der Reflektor (1) in ein topfförmiges Gehäuse (5) eingesetzt ist, mit welchem das federnde Halteelement (2) verbunden ist und welches eine Öffnung (6) zur Aufnahme des Verstellelementes (4) aufweist, dadurch gekennzeichnet, daß das federnde Halteelement (2) stabförmig ausgeführt ist, in seiner Längsausdehnung quer zur Einsetzrichtung des Reflektors (1) verläuft, an dem Gehäuse (5) fest eingespannt ist und einen freistehenden Endabschnitt (7) aufweist, welcher in eine Hinterschneidung (8) des Reflektors (1) selbstrastend eingreift.

2. Halteeinrichtung nach Anspruch 1, dadurch gekennzeichnet, daß das Gehäuse (5) mit einer entgegen der Einsetzrichtung des Reflektors (1) gerichteten und als Anschlag (9) für den freien Endabschnitt (7) des Halteelementes (2) dienenden Fläche versehen ist, von welcher der freie Endabschnitt (7) bei eingesetztem Verstellelement (4) abgehoben ist.

3. Halteeinrichtung nach Anspruch 1 oder 2, dadurch gekennzeichnet, daß die Rückseite des Reflektors (1) mit einer schräg zur Einsetzrichtung des Reflektors (1) verlaufenden Auflauffläche (10) für den freien Endabschnitt (7) des Halteelementes (2) versehen ist.

4. Halteeinrichtung nach einem der Ansprüche 1 bis 3, dadurch gekennzeichnet, daß an der Rückseite des Reflektors (1) ein Verbindungselement (11) befestigt ist, welches die für das Verstellelement (4) dienende Anlagefläche (3) und die für das Halteelement (2) dienende Auflauffläche (10) und Hinterschneidung (8) aufweist.

5. Halteeinrichtung nach einem der Ansprüche 1 bis 4, dadurch gekennzeichnet, daß das Halteelement (2) in einem Abschnitt zwischen seiner Einspannstelle (12) und seinem freien federnden Endabschnitt (7) um eine quer zu seiner Längsausdehnung verlaufende Achse zu einer Schraubenfeder (13) gewickelt ist.

6. Halteeinrichtung nach einem der vorstehenden Ansprüche, dadurch gekennzeichnet, daß das federnde Halteelement (2) durch ein bolzenartiges Befestigungselement (17) an dem Gehäuse (5) fest eingespannt ist, wobei das bolzenartige Befestigungselement (17) mit einem Kopf das Halteelement (2) übergreift und gegen das Gehäuse (5) drückt.

7. Halteeinrichtung nach einem der Ansprüche 1 bis 6, dadurch gekennzeichnet, daß das federnde Halteelement (2) aus einer U-förmig gebogenen Drahtfeder besteht, deren Schenkel jeweils ein stabförmiges Teil sind, das Verbindungselement (11) zwischen sich aufnehmen und in jeweils eine Hinterschneidung (8) des Verbindungselementes (11) eingreifen.

8. Halteeinrichtung nach Anspruch 7, dadurch gekennzeichnet, daß bei demontiertem Verstellelement (11) ein Abstandselement (14) des Gehäuses (5) zwischen die beiden Schenkel des Halteelementes (2) eingreift.

9. Halteeinrichtung nach Anspruch 7 oder 8, dadurch gekennzeichnet, daß die beiden Schenkel des U-förmigen Halteelementes (2) auf sich gegenüberliegenden Seiten jeweils in einem Abschnitt zu einer Schraubenfeder (13) gewickelt sind, welche zu den freien Endabschnitten (7) der Schenkel hin nach außen hin verlaufen und welche nach außen hin jeweils an ein Abstützelement des Gehäuses (5) angrenzen.

10. Halteeinrichtung nach einem der vorstehenden Ansprüche, dadurch gekennzeichnet, daß von dem Boden des topfförmigen Gehäuses (5) zum Inneren des Scheinwerfers hin Ansätze (26, 27, 28, 29) hervorstreben, welches Distanzstücke und/oder Befestigungsmittel für das Halteelement (2) sind.

## Claims

1. Holder device for an adjustable reflector (1) of a vehicle headlamp, having a resilient holding element (2) by means of which the reflector (1) can be made to bear under pre-load with a bearing surface (3) against an adjustment element (4), the reflector (1) being inserted in a pot shaped housing (5) to which the resilient holding element (2) is connected and which has an opening (6) to receive the adjustment element (4), characterised in that the resilient holding element (2) is made rod shaped, extends by its longitudinal reach transversely with respect to the insertion direction of the reflector (1), is securely clamped to the housing (5), and has a self supporting end section (7) which engages and self latches with an undercut (8) of the reflector (1).

2. Holder device according to claim 1, characterised in that the housing (5) is provided with a surface which is directed in a direction opposite to the insertion direction of the reflector (1) and which serves as an abutment (9) for the free end section (7) of the holding element (2), the free end section (7), with the adjustment element (4) inserted, being lifted free of the said surface.

3. Holder device according to claim 1 or 2, characterised in that the back of the reflector (1) is provided with a ramp surface (10) for the free end section (7) of the holding element (2), the ramp surface(10) extending at an inclination with respect to the insertion direction of the reflector (1).

4. Holder device according to one of claims 1 to 3, characterised in that a connecting element (11) is secured to the back of the reflector (1), the connecting element (11) having the bearing surface (3) that serves for the adjustment element (4), and the ramp surface (10) that serves for the holding element (2), and the undercut (8).

5. Holder device according to one of claims 1 to 4, characterised in that the holding element (2) is wound into the form of a helical spring (13) at a section between its clamping location (12) and its free resilient end section (7) about an axis that extends transversely with respect to its longitudinal reach.

6. Holder device according to one of the preceding claims, characterised in that the resilient holding element (2) is securely clamped to the housing (5) by a stud like securing element (17), the stud like securing element (17) with its head reaching over the holding element (2) and pressing against the housing (5).

7. Holder device according to one of claims 1 to 6, characterised in that the resilient holding element (2) consists of a wire spring bent into U-shape whose limbs are each a rod shaped part which receive the connecting element (11) between them, and each engaging in an undercut (8) of the connecting element (11).

8. Holder device according to claim 7, characterised in that, with the adjustment element (11) disassembled, a spacer element (14) of the housing (5) engages between the two limbs of the holding element (2).

9. Holder device according to claim 7 or 8, characterised in that the two limbs of the U-shaped holding element (2) are wound at mutually opposite sides, in respective sections, into the form of a helical spring (13), which extend outwardly towards the free end sections (7) of the limbs, and which towards the outside respectively adjoin a support element of the housing (5).

10. Holder device according to one of the preceding claims, characterised in that projections (26, 27, 28, 29) jut out from the base of the pot shaped housing (5) towards the interior of the headlamp and constitute distance pieces and/or securing means for the holding element (2).

## Revendications

1. Dispositif de retenue pour un réflecteur (1) réglable d'un phare de véhicule, comportant un élément de retenue (2) élastique grâce auquel le réflecteur (1) est susceptible d'être mis en appui sous contrainte par une surface d'appui (3) contre un élément de réglage (4), le réflecteur (1) étant mis en place dans un boîtier (5) en forme de pot avec lequel est relié l'élément de retenue (2) élastique et lequel présente une ouverture (6) destinée à la réception de l'élément de réglage (4), caractérisé en ce que l'élément de retenue (2) élastique est réalisé sous forme de tige, en ce qu'il s'étend dans son extension longitudinale transversalement à la direction de mise en place du réflecteur (1), en ce qu'il est serré fermement sur le boîtier (5), et en ce qu'il présente un tronçon d'extrémité (7) libre qui s'engage à auto-enclenchement dans une contre-dépouille (8) du réflecteur (1).

2. Dispositif de retenue selon la revendication 1, caractérisé en ce que le boîtier (5) est pourvu d'une surface orientée à l'opposé de la direction de mise en place du réflecteur (1) et servant de butée (9) pour le tronçon d'extrémité (7) libre de l'élément de retenue (2), ledit tronçon d'extrémité (7) libre étant soulevé de cette surface lorsque l'élément de réglage (4) est mis en place.

3. Dispositif de retenue selon l'une ou l'autre des revendications 1 et 2, caractérisé en ce que la face arrière du réflecteur (1) est pourvue d'une surface de glissement (10) s'étendant en pente par rapport à la direction de mise en place du réflecteur (1) pour le tronçon d'extrémité (7) de l'élément de retenue (2) élastique.

4. Dispositif de retenue selon l'une quelconque des revendications 1 à 3, caractérisé en ce que sur la face arrière du réflecteur (1) est fixé un élément de liaison (11) qui présente la surface d'appui (3) servant à l'élément de réglage (4) et la surface d'appui (10) servant à l'élément de retenue (2), et la contre-dépouille (8).

5. Dispositif de retenue selon l'une quelconque des revendications 1 à 4, caractérisé en ce que l'élément de retenue (2) est enroulé pour former un ressort hélicoïdal (33) dans un tronçon entre son point de serrage (12) et son tronçon d'extrémité (7) libre élastique autour d'un axe s'étendant transversalement à son extension longitudinale.

6. Dispositif de retenue selon l'une quelconque des revendications précédentes, caractérisé en ce que le l'élément de retenue (2) élastique est serré fermement sur le boîtier (5) par un élément de fixation (17) en forme de boulon, l'élément de fixation (17) en forme de boulon coiffant par une tête l'élément de retenue (2) et le pressant contre le boîtier (5).

7. Dispositif de retenue selon l'une quelconque des revendications 1 à 6, caractérisé en ce que l'élément de retenue (2) élastique est constitué par un ressort métallique plié en forme de U dont les branches sont chacune une pièce en forme de tige, en ce qu'elles reçoivent entre elles l'élément de liaison (11) et en ce qu'elles s'engagent dans une contre-dépouille (8) respective de l'élément de liaison (11).

8. Dispositif de retenue selon la revendication 7, caractérisé en ce que lorsque l'élément de réglage (11) est démonté, un élément écarteur (14) du boîtier (5) s'engage entre les deux branches de l'élément de retenue (2).

9. Dispositif de retenue selon l'une ou l'autre des revendications 7 et 8, caractérisé en ce que les deux branches de l'élément de retenue (2) en forme de U sont enroulées sur des côtés opposés en un tronçon respectif pour former des ressorts hélicoïdaux (13), qui s'étendent vers l'extérieur, vers les tronçons d'extrémité (7) libres des branches, et qui vers l'extérieur sont chacune adjacentes d'un élément de soutien du boîtier (5).

10. Dispositif de retenue selon l'une quelconque des revendications précédentes, caractérisé en ce que des prolongements (26, 27, 28, 29) font saillie depuis le fond du boîtier (5) en forme de pot vers l'intérieur du phare, lesquels sont des écarteurs et/ou moyens de fixation pour le l'élément de retenue (2) élastique.
